# EUROPÄISCHE PATENTANMELDUNG

(11) **EP 1 386 769 A2**
(43) Veröffentlichungstag der Anmeldung: **04.02.2004**
(21) Anmeldenummer: 03102366.6
(22) Anmeldetag: 30.07.2003
(51) Int. Cl.: B60J 10/00, B60J 10/04

(54) **Verfahren zum Herstellen einer Dichtung, insbesondere für die Abdichtung einer Fensterscheibe eines Kraftfahrzeugs, und eine solche Dichtung**

(30) Priorität: 01.08.2002 DE 10235220
(71) Anmelder: Metzeler Automotive Profile Systems GmbH, 88131 Lindau/Bodensee (DE)
(72) Erfinder: Brocke, Rolf, 88239 Wangen (DE); Fritz, Jörg, 88138 Weissenberg (DE)
(74) Vertreter: Schober, Christoph D.

(57) **Zusammenfassung**

Ein Verfahren zum Herstellen einer Dichtung, insbesondere für die Abdichtung einer Fensterscheibe (33) eines Kraftfahrzeugs (30), ermöglicht auf kostengünstige Weise, Dichtungen herzustellen, die einfach zu montieren und mit unterschiedlichen Dekorkörpern versehbar sind. Grund hierfür ist, daß bei dem Verfahren ein strangförmiger Dichtungskörper (10) in einem Extrusionsprozeß aus einer im erwärmten Zustand formbaren Formmasse extrudiert wird und ein Dekorkörper (20), der eine Dekorfläche (21) aufweist, die sich parallel zu einer Außenfläche (11) des Dichtungskörpers (10) erstreckt, mit dem Dichtungskörper (10) während des Extrusionsprozesses verbunden wird. Eine auf diese Weise hergestellte Dichtung weist eine Dekorfläche (21) auf, die nach dem Extrusionsprozeß von der Außenfläche (11) durch eine Haut (13) beabstandet im Inneren des Dichtungskörpers (10) angeordnet ist, wobei die Haut (13) zum Freilegen der Dekorfläche (21) entfernbar ist und bis dahin diese schützt.

## Beschreibung

Die Erfindung betrifft ein Verfahren zum Herstellen einer Dichtung, die insbesondere für die Abdichtung einer Fensterscheibe eines Kraftfahrzeugs dient. Bei dem Verfahren wird ein strangförmiger Dichtungskörper in einem Extrusionsprozeß aus einer im erwärmten Zustand formbaren Formmasse extrudiert. Zudem wird ein Dekorkörper, der eine Dekorfläche aufweist, die sich parallel zu einer Außenfläche des Dichtungskörpers erstreckt, mit dem Dichtungskörper verbunden. Die Erfindung bezieht sich ferner auf eine solche Dichtung.

Ein Verfahren zum Herstellen einer Dichtung wird in der DE 44 41 345 A1 beschrieben. Das bekannte Verfahren sieht vor, einen aus einem Elastomer extrudierten Dichtungskörper während des Extrusionsprozesses mit einem elektrisch leitfähigen Bereich zu versehen. Der elektrisch leitfähige Bereich wird nach dem Extrusionsprozeß durch eine elektrochemische Behandlung mit einer metallenen Dekorschicht überzogen. Die einen Dekorkörper im oben genannten Sinne darstellende Dekorschicht trägt zu einer Verringerung des Montage- und Logistikaufwands für den Einbau der Dichtung bei, da ein separater Dekorkörper, beispielsweise in Form einer Zierleiste wie in der DE 34 42 241 A1 offenbart, entbehrlich ist.

Als unbefriedigend hat sich bei dem bekannten Verfahren erwiesen, daß die Ausgestaltung des Dekorkörpers auf eine metallene Dekorschicht beschränkt ist. Den unterschiedlichen Anforderungen, die vor allem im Fahrzeugbau an das optische Erscheinungsbild gestellt werden, vermag die durch das bekannte Verfahren gefertigte Dichtung nur in unzureichendem Maße zu genügen. Demgegenüber gestattet ein separat gefertigter und nach der Extrusion des Dichtungskörpers mit diesem verbundener Dekorkörper, wie in der DE 34 42 241 A1 beschrieben, zwar eine vergleichsweise große Formen- und Farbvielfalt, die Befestigung des Dekorkörpers an dem Dichtungskörper geht aber mit einem vergleichsweise hohen Montageaufwand und in der Praxis unvermeidlichen Toleranzproblemen einher.

Weiterhin beschreibt die EP 0 154 121 A1 ein Verfahren zum Herstellen von Dichtungsstreifen und ähnlichen Profilsträngen aus Kautschuk und kautschukartigen Elastomeren. Das bekannte Verfahren sieht die Verwendung einer mit einer formgebenden Strangpreßdüse versehenen Strangpresse vor. Ein Belagstreifen, der aus einem anderen Werkstoff als ein Profilstrang besteht, wird in der Strangpreßdüse mit dem Profilstrang zusammengeführt und mit diesem vereinigt durch die Strangpreßdüse hindurchgepreßt. Nach dem Durchlauf durch die Strangpreßdüse wird der Profilstrang zusammen mit dem Belagstreifen vulkanisiert.

Außerdem offenbart die DE 66 02 285 eine Schichtleiste, die sich aus einer Trägerleiste und einem Überzug zusammensetzt. Die Schichtleiste kann als Zierleiste eingesetzt werden. Der ausschließlich dekorativen Zwecken dienende Überzug kann zum Beispiel als Gewebe oder Metallband ausgebildet und stoffschlüssig und/oder formschlüssig mit der Trägerleiste verbunden sein. Zu diesem Zweck wird der Überzug in ein die Trägerleiste fertigendes Spritzwerkzeug eingeführt. Um den Überzug daran zu hindern, auf Grund des hohen Arbeitsdrucks des Spritzwerkzeugs gegen eine Düsenwandung gedrückt und damit beschädigt zu werden, ist der Überzug von einer Abdeckschicht bedeckt, die vornehmlich dazu dient, ein Gleitpolster in dem Spritzwerkzeug zu schaffen. Die Abdeckschicht verfolgt zudem den Zweck, den Überzug bis zur Montage der Schichtleiste zu schützen. Die Abdeckschicht kann durch ein abwischbares Schmiermittel oder durch einen abziehbaren Kunststoffbelag, der aus einem anderen Kunststoff als die Trägerleiste besteht, gebildet werden.

Der Erfindung liegt die **Aufgabe** zugrunde, ein Verfahren zu schaffen, durch das sich auf kostengünstige Weise Dichtungen herstellen lassen, die einfach zu montieren und mit unterschiedlichen Dekorkörpern versehbar sind. Außerdem soll eine derartige Dichtung angegeben werden.

Zur **Lösung** dieser Aufgabe ist bei einem Verfahren mit den eingangs genannten Merkmalen in Übereinstimmung mit Anspruch 1 erfindungsgemäß vorgesehen, daß der Dekorkörper während des Extrusionsprozesses mit dem Dichtungskörper verbunden wird. Die Dekorfläche wird während des Extrusionsprozesses von der Außenfläche durch eine aus der Formmasse gebildete Haut beabstandet im Inneren des Dichtungskörpers angeordnet.

Das erfindungsgemäße Verfahren macht sich die Erkenntnis zu eigen, den Dekorkörper bei der Extrusion des Dichtungskörpers mit diesem zu verbinden. Der Dekorkörper kann als separates Bauteil ausgebildet sein, das einer geforderten Form- und Farbgebung entspricht. Aufgrund der Verbindung des Dekorkörpers mit dem Dichtungskörper während des Extrusionsprozesses wird eine nachträgliche Befestigung des Dekorkörpers, wie im Stand der Technik üblich, entbehrlich, so daß eine einfache Montage sichergestellt ist. Zudem läßt sich auf diese Weise eine lagegenaue Anordnung des Dekorkörpers an dem Dichtungskörper erreichen, die zu einem in ästhetischer Hinsicht ansprechenden optischen Erscheinungsbild der Dichtung beiträgt.

Die Dekorfläche wird während des Extrusionsprozesses von der Außenfläche durch eine Haut beabstandet im Inneren des Dichtungskörpers angeordnet. Die durch die Formmasse gebildete Haut stellt einen Schutz für die Dekorfläche dar, so daß das Vorsehen einer separaten Schutzfolie entbehrlich ist. Bildet die Dekorfläche nach dem Extrusionsprozeß hingegen einen Teil der Außenfläche, ist es zweckmäßig die Dekorfläche mit einer Schutzfolie zu überziehen. Eine solche Ausgestaltung setzt voraus, daß der Dekorkörper während des Extrusionsprozesses derart in die Formmasse, aus welcher der Dichtungskörper gebildet wird, eingesetzt wird, daß sich die Dekorfläche entlang der Außenfläche des extrudierten Dichtungskörpers erstreckt. Um die etwa polierte, lackierte oder mit einer Dekorfolie beschichtete Dekorfläche während des Extrusionsprozesses zu schützen, wird die Schutzfolie auf der Dekorfläche angeordnet und nach dem Extrusionsprozeß entfernt.

Vorteilhafte Ausgestaltungen des erfindungsgemäßen Verfahrens stellen die Gegenstände der Ansprüche 2 bis 8 dar.

So ist es in Hinsicht auf eine zuverlässige Befestigung des Dekorkörpers an dem Dichtungskörper von Vorteil, den Dekorkörper formschlüssig und/oder stoffschlüssig mit dem Dichtungskörper zu verbinden. Ein Formschluß zwischen Dekorkörper und Dichtungskörper läßt sich beispielsweise dadurch erreichen, daß der Dekorkörper mit einem gekrümmten Abschnitt versehen wird, der während des Extrusionsprozesses von der Formmasse des Dichtungskörpers umschlossen wird. Demgegenüber läßt sich durch eine geeignete Wahl des Werkstoffs, aus dem der Dekorkörper besteht, erreichen, daß während des Extrusionprozesses eine adhäsive und damit stoffschlüssige Verbindung zwischen Dekorkörper und Dichtungskörper entsteht.

Bevorzugt wird die Haut zum Freilegen der Dekorfläche nach dem Extrusionsprozeß entfernt. Vor allem dann, wenn die Dekorfläche hochglänzend und damit empfindlich für Schrammen ist, erweist sich die Haut als wirksamer und praxisgerechter Schutz. Die Haut kann zum Beispiel nach der Montage der Dichtung an einem Kraftfahrzeug oder sogar erst kurz vor der Übergabe des Kraftfahrzeugs an einen Kunden entfernt werden.

Vorteilhafterweise wird der Dekorkörper durch einen den Dichtungskörper armierenden Träger gebildet, der vorzugsweise aus Kunststoff oder zumindest bereichsweise oberflächenbehandeltem Metall besteht. Indem der zur Armierung des Dichtungskörpers im allgemeinen ohnehin erforderliche Träger zugleich den Dekorkörper bildet, das heißt eine Fläche des Trägers die Dekorfläche ist, ergibt sich eine funktionelle Integration, die eine kostengünstige Herstellung sicherstellt. Der Träger kann in an sich bekannter Weise aus Kunststoff oder Metall bestehen, wobei die Fläche des Trägers, welche die Dekorfläche bildet, in geeigneter Weise behandelt sein kann, beispielsweise lackiert, poliert oder eloxiert.

In einer alternativen Ausgestaltung des erfindungsgemäßen Verfahrens wird der Dekorkörper vorteilhafterweise durch eine Zierleiste gebildet, die vorzugsweise aus Kunststoff oder oberflächenbehandeltem Metall besteht. Die Zierleiste kann als separates Bauteil vorgefertigt sein, das auf diese Weise eine hohe Formen- und Farbvielfalt gewährleistet.

Weiterhin kann in einer alternativen Ausgestaltung des erfindungsgemäßen Verfahrens der Dekorkörper durch eine glänzende Folie gebildet werden, die vorzugsweise aus Kunststoff oder Metall besteht. Die Ausgestaltung des Dekorkörpers als Folie trägt zu einer besonders kostengünstigen Fertigung bei.

Um dem als Folie oder Zierleiste ausgebildeten Dekorkörper einen ausreichend festen Untergrund zu geben, wird der Dichtungskörper bevorzugt mit einer Befestigungsschicht versehen, an welcher der Dekorkörper angeordnet wird. Die Befestigungsschicht kann beispielsweise durch Koextrusion in dem Dichtungskörper ausgebildet werden und aus einem verhältnismäßig harten Werkstoff, etwa Polyvinylchlorid (PVC), bestehen.

Außerdem wird in Weiterbildung des erfindungsgemäßen Verfahrens vorgeschlagen, daß die Formmasse aus einem thermoplastischen Kunststoff und/oder einem Elastomer, vorzugsweise Ethylen-Propylen-Dien-Kautschuk (EPDM), besteht, um einen praxisgerechten Extrusionsprozeß sicherzustellen.

Überdies wird zur **Lösung** der oben genannten Aufgabe in Übereinstimmung mit Anspruch 11 eine Dichtung vorgeschlagen, die insbesondere zum Abdichten einer Fensterscheibe eines Kraftfahrzeugs dient und einen strangförmigen Dichtungskörper und einen Dekorkörper aufweist. Der Dichtungskörper ist in einem Extrusionsprozeß aus einer im erwärmten Zustand formbaren Formmasse extrudierbar. Der mit dem Dichtungskörper verbundene Dekorkörper weist eine Dekorfläche auf, die sich parallel zu einer Außenfläche des Dichtungskörpers erstreckt. Die Dekorfläche ist nach dem Extrusionsprozeß von der Außenfläche durch eine Haut beabstandet im Inneren des Dichtungskörpers angeordnet, wobei die Haut zum Freilegen der Dekorfläche entfernbar ist.

Eine solchermaßen ausgestaltete Dichtung macht sich die Vorteile des erfindungsgemäßen Verfahrens zunutze. So läßt sich etwa der Dekorkörper lagegenau an dem Dichtungskörper anordnen. Darüber hinaus gewährleistet die Haut, bis sie entfernt wird, einen wirksamen Schutz der Dekorfläche vor Umgebungseinflüssen.

Vorteilhafte Ausgestaltungen der erfindungsgemäßen Dichtung stellen die Gegenstände der Ansprüche 12 bis 17 dar. Danach kann der Dekorkörper vorteilhafterweise ein den Dichtungskörper armierender Träger, eine Zierleiste oder eine glänzende Folie sein. Vor allem dann, wenn der Dekorkörper eine Zierleiste oder eine Folie ist, ist es ferner von Vorteil, wenn der Dichtungskörper eine Befestigungsschicht aufweist, an welcher der Dekorkörper angeordnet ist. Der Dekorkörper ist bevorzugt formschlüssig und/oder stoffschlüssig mit dem Dichtungskörper verbunden.

Einzelheiten und weitere Vorteile der Gegenstände der vorliegenden Erfindung ergeben sich aus der nachfolgenden Beschreibung bevorzugter Ausführungsbeispiele. In den die Ausführungsbeispiele lediglich schematisch darstellenden Zeichnungen veranschaulichen im einzelnen:
- Fig. 1: eine Seitenansicht eines Kraftfahrzeugs;
- Fig. 2: einen Querschnitt entlang der Linie II in Fig. 1 durch eine Dichtung in einer ersten Ausführungsform;
- Fig. 3: einen Querschnitt gemäß Fig. II durch eine Dichtung in einer zweiten Ausführungsform;
- Fig. 4: einen Querschnitt gemäß Fig. 2 durch eine Dichtung in einer dritten Ausführungsform und
- Fig. 5: einen Querschnitt gemäß Fig. 2 durch eine Dichtung in einer vierten Ausführungsform.

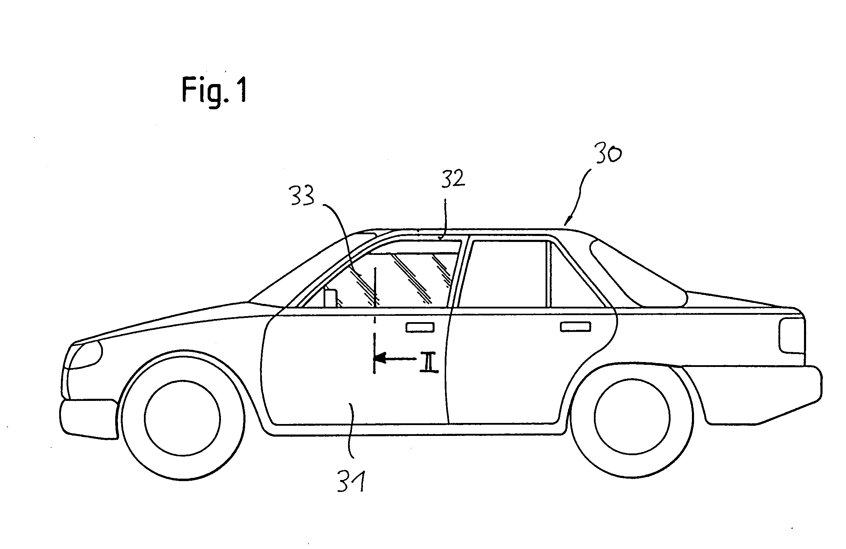

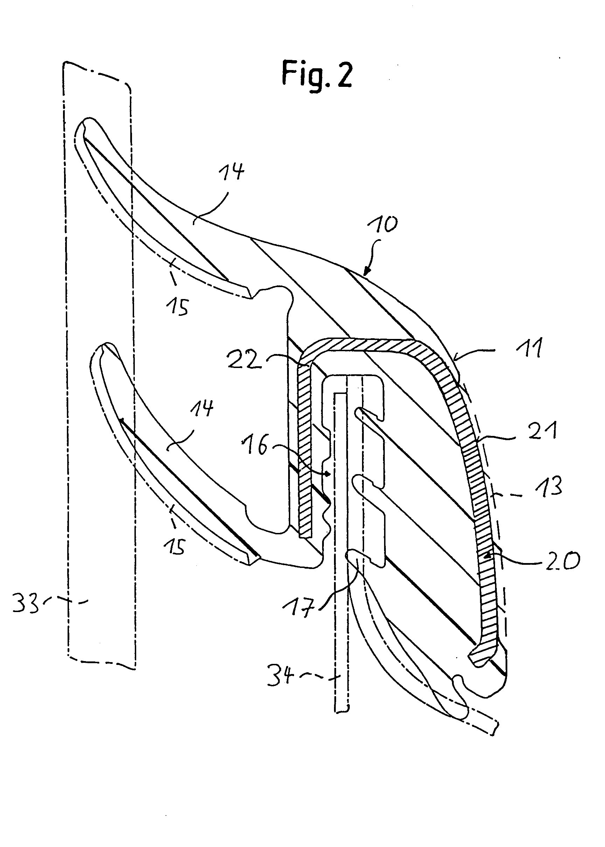

Das in Fig. 1 dargestellte Kraftfahrzeug 30 ist mit einer Tür 31 versehen, die einen Rahmen 32 aufweist. Innerhalb des Rahmens 32 ist eine Fensterscheibe 33 verfahrbar angeordnet. Die Fensterscheibe 33 wird durch eine Dichtung abgedichtet, die an einem Flansch 34 der Tür 31 befestigt ist. Zu diesem Zweck weist die Dichtung einen Dichtungskörper 10 auf, der mit einer kanalförmigen Ausnehmung 16 versehen ist, die auf den Flansch 34 gesteckt ist, wie insbesondere aus den Fig. 2 bis 5 ersichtlich ist. In der Ausnehmung 16 sind Haltelippen 17 angeordnet, die den Dichtungskörper 10 kraftschlüssig mit dem Flansch 34 verbinden.

Der Dichtungskörper 10 erstreckt sich entlang dem Umfang des Rahmens 32 und weist Dichtungslippen 14 auf, die an der Fensterscheibe 33 anliegen. Die Dichtungslippen 14 sind mit einer die Reibung vermindernden Beflockung 15 versehen. Der Dichtungskörper 10 weist zumindest im Bereich eines die Fensterscheibe 33 aufnehmenden Schachts der Tür 31 einen Dekorkörper 20 auf, der mit einer sich entlang einer Außenfläche 11 des Dichtungskörpers 10 erstreckenden Dekorfläche 21 versehen ist. Die Dekorfläche 21 verleiht dem Dichtungskörper 10 ein in ästhetischer Hinsicht ansprechendes optisches Erscheinungsbild und kann zu diesem Zweck aus lackiertem oder mit einer Dekorfolie kaschierten Kunststoff oder zumindest bereichsweise oberflächenbehandeltem Metall bestehen. In letzterem Fall kann die Dekorfläche 21 beispielsweise aus poliertem oder eloxiertem Aluminium gefertigt sein.

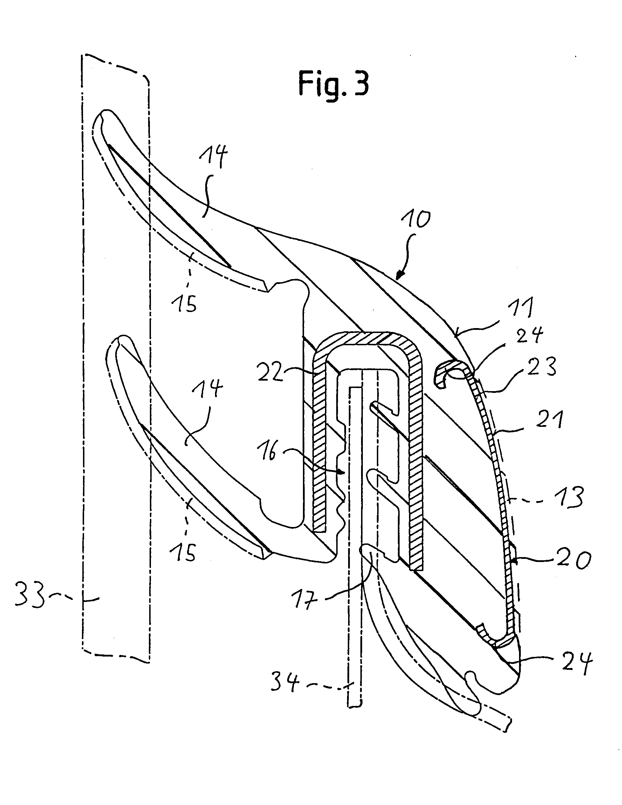

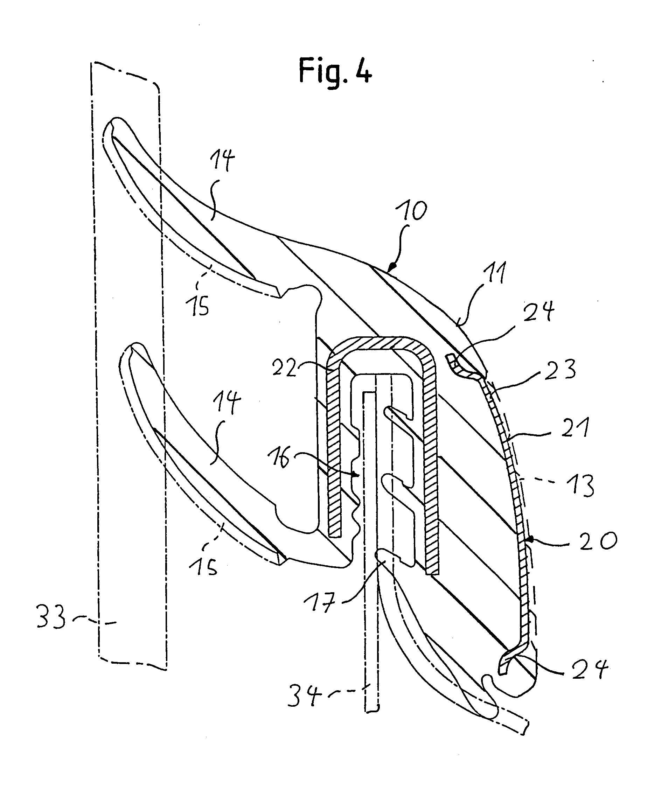

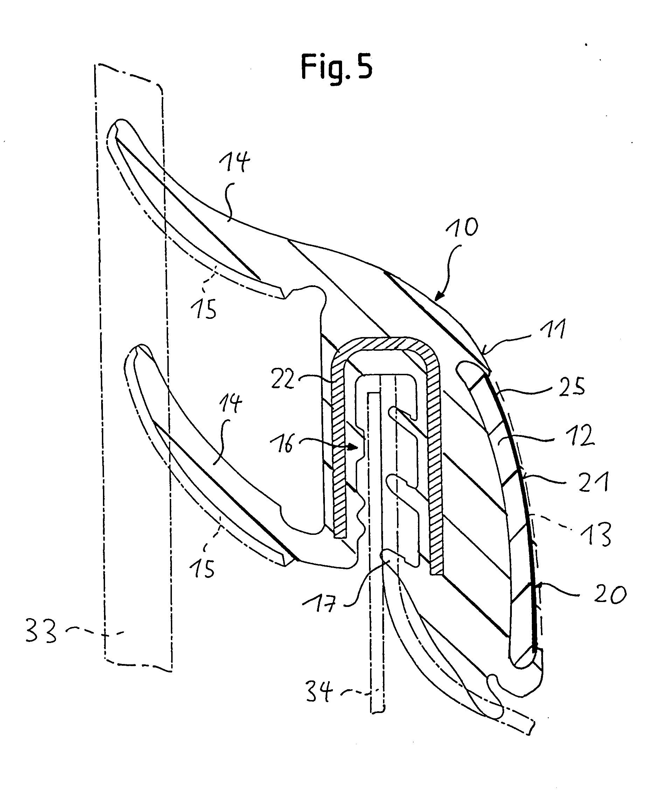

Der Dichtungskörper 10 wird im Bereich der Ausnehmung 16 durch einen aus Kunststoff oder Metall bestehenden Träger 22 armiert, der eine im Querschnitt annähernd U-förmige Ausgestaltung aufweist. Bei der in Fig. 2 gezeigten Ausführungsform wird der Dekorkörper 20 durch einen Schenkel des Trägers 22 gebildet, der sich entlang der Außenfläche 11 erstreckt. Demgegenüber zeigen die Fig. 3 und 4 einen Dekorkörper 20, der als Zierleiste 23 ausgebildet ist. Die etwa aus Kunststoff oder Metall bestehende Zierleiste 23 weist an den Rändern gekrümmte Abschnitte 24 auf, die eine formschlüssige Verankerung in dem Dichtungskörper 10 bewirken. Im Unterschied hierzu ist in Fig. 5 ein Dekorkörper 20 dargestellt, der durch eine glänzende Folie 25 gebildet wird. Die Folie 25 ist auf einer Befestigungsschicht 12 des Dichtungskörpers 10 angeordnet und stoffschlüssig mit dieser verbunden.

Den unterschiedlichen Ausführungsformen gemäß den Fig. 2 bis 5 ist gemeinsam, daß der Dichtungskörper 10 in einem Extrusionsprozeß aus einer im erwärmten Zustand formbaren Formmasse extrudiert wird. Die Formmasse besteht beispielsweise überwiegend aus im extrudierten Zustand elastisch verformbarem EPDM, wobei die etwa durch Koextrusion in dem Dichtungskörper 10 ausgebildete Befestigungsschicht 12 aus einem härteren Werkstoff, zum Beispiel einem thermoplastischen Kunststoff, gefertigt ist. Der Dekorkörper 20 wird während des Extrusionsprozesses mit dem Dichtungskörper 10 verbunden. Zu diesem Zweck wird der Dekorkörper 20 derart in der Formmasse angeordnet, daß sich die Dekorfläche 21 in einem geringen Abstand parallel zu der Außenfläche 11 erstreckt. Auf diese Weise wird bei der Extrusion des Dichtungskörpers 10 eine Haut 13 erzeugt, welche die Dekorfläche 21 abdeckt. Die Haut 13 wird nach dem Extrusionsprozeß zum Freilegen der Dekorfläche 21 entfernt.

Bis dahin wird die Dekorfläche 21 durch die Haut 13 vor Umgebungseinflüssen geschützt. Vor allem dann, wenn die Dekorfläche 21 hochglänzend und damit besonders empfindlich für das optische Erscheinungsbild beeinträchtigende Schrammen ist, stellt die Haut 13 einen wirksamen Schutz dar, der etwa bis zur Montage des Dichtungskörpers 10 an dem Kraftfahrzeug 30 verbleiben kann.

Die zuvor beschriebenen Ausführungsformen einer Dichtung zum Abdichten der Fensterscheibe 33 des Kraftfahrzeugs 30 zeichnen sich durch eine kostengünstige Herstellung und eine einfache Montage aus. Grund hierfür ist vor allem, daß der Dekorkörper 20 während der Extrusion des Dichtungskörpers 10 mit diesem verbunden wird. Auf diese Weise ist eine separate Befestigung des Dekorkörpers 20 an dem Dichtungskörper 10 entbehrlich. Darüber hinaus gewährleistet ein solches Herstellungsverfahren eine paßgenaue Anordnung und zuverlässige Befestigung, etwa durch Formschluß oder Stoffschluß, des Dekorkörpers 20 an dem Dichtungskörper 10. Nicht zuletzt ermöglicht das beschriebene Herstellungsverfahren eine variable Ausgestaltung des Dekorkörpers 20. Den unterschiedlichsten Anforderungen, die vor allem im Fahrzeugbau an einen Dekorkörper 20 gestellt werden, wird somit Rechnung getragen.

### Bezugszeichenliste

- 10: Dichtungskörper
- 11: Außenfläche
- 12: Befestigungsschicht
- 13: Haut
- 14: Dichtungslippe
- 15: Beflockung
- 16: Ausnehmung
- 17: Haltelippe

- 20: Dekorkörper
- 21: Dekorfläche
- 22: Träger
- 23: Zierleiste
- 24: gekrümmter Abschnitt
- 25: Folie

- 30: Kraftfahrzeug
- 31: Tür
- 32: Rahmen
- 33: Fensterscheibe
- 34: Flansch

## Patentansprüche

1. Verfahren zum Herstellen einer Dichtung, insbesondere für die Abdichtung einer Fensterscheibe (33) eines Kraftfahrzeugs (30), bei dem ein strangförmiger Dichtungskörper (10) in einem Extrusionsprozess aus einer im erwärmten Zustand formbaren Formmasse extrudiert wird und ein Dekorkörper (20), der eine Dekorfläche (21) aufweist, die sich parallel zu einer Aussenfläche (11) des Dichtungskörpers (10) erstreckt, mit dem Dichtungskörper (10) verbunden wird, **dadurch gekennzeichnet, dass** der Dekorkörper (20) während des Extrusionsprozesses mit dem Dichtungskörper (10) verbunden wird, wobei die Dekorfläche (21) während des Extrusionsprozesses von der Aussenfläche (11) durch eine aus der Formmasse gebildete Haut (13) beabstandet im Inneren des Dichtungskörpers (10) angeordnet wird.

2. Verfahren nach Anspruch 1, **dadurch gekennzeichnet, dass** der Dekorkörper (20) formschlüssig und/oder stoffschlüssig mit dem Dichtungskörper (10) verbunden wird.

3. Verfahren nach Anspruch 1 oder 2, **dadurch gekennzeichnet, dass** die Haut (13) zum Freilegen der Dekorfläche (21) nach dem Extrusionsprozess entfernt wird.

4. Verfahren nach einem der Ansprüche 1 bis 3, **dadurch gekennzeichnet, dass** der Dekorkörper (20) durch einen den Dichtungskörper (10) armierenden Träger (22) gebildet wird, der vorzugsweise aus Kunststoff oder zumindest bereichsweise oberflächenbehandeltem Metall besteht.

5. Verfahren nach einem der Ansprüche 1 bis 3, **dadurch gekennzeichnet, dass** der Dekorkörper (20) durch eine Zierleiste (23) gebildet wird, die vorzugsweise aus Kunststoff oder oberflächenbehandeltem Metall besteht.

6. Verfahren nach einem der Ansprüche 1 bis 3, **dadurch gekennzeichnet, dass** der Dekorkörper (20) durch eine glänzende Folie (25) gebildet wird, die vorzugsweise aus Kunststoff oder Metall besteht.

7. Verfahren nach Anspruch 5 oder 6, **dadurch gekennzeichnet, dass** der Dichtungskörper (10) mit einer Befestigungsschicht (12) versehen wird, an welcher der Dekorkörper (20) angeordnet wird.

8. Verfahren nach einem der Ansprüche 1 bis 7, **dadurch gekennzeichnet, dass** die Formmasse aus einem thermoplastischen Kunststoff und/oder einem Elastomer, vorzugsweise Ethylen-Propylen-Dien-Kautschuk, besteht.

9. Dichtung, insbesondere zum Abdichten einer Fensterscheibe (33) eines Kraftfahrzeugs (30), mit einem strangförmigen Dichtungskörper (10), der in einem Extrusionsprozess aus einer im erwärmten Zustand formbaren Formmasse extrudierbar ist, und einem Dekorkörper (20), der mit dem Dichtungskörper (10) verbunden ist und eine Dekorfläche (21) aufweist, die sich parallel zu einer Aussenfläche (11) des Dichtungskörpers (10) erstreckt, **dadurch gekennzeichnet, dass** die Dekorfläche (21) nach dem Extrusionsprozess von der Aussenfläche (11) durch eine aus der Formmasse gebildete Haut (13) beabstandet im Inneren des Dichtungskörpers (10) angeordnet ist, wobei die Haut (13) zum Freilegen der Dekorfläche (21) entfernbar ist.

10. Dichtung nach Anspruch 9, **dadurch gekennzeichnet, dass** der Dekorkörper (20) ein den Dichtungskörper (10) armierender Träger (22) ist, der vorzugsweise aus Kunststoff oder zumindest bereichsweise poliertem Metall besteht.

11. Dichtung nach Anspruch 9, **dadurch gekennzeichnet, dass** der Dekorkörper (20) eine Zierleiste (23) ist, die vorzugsweise aus Kunststoff oder poliertem Metall besteht.

12. Dichtung nach Anspruch 9, **dadurch gekennzeichnet, dass** der Dekorkörper (20) eine glänzende Folie (25) ist, die vorzugsweise aus Kunststoff oder Metall besteht.

13. Dichtung nach Anspruch 11 oder 12, **dadurch gekennzeichnet, dass** der Dichtungskörper (10) eine Befestigungsschicht (12) aufweist, an welcher der Dekorkörper (20) angeordnet ist.

14. Dichtung nach einem der Ansprüche 9 bis 13, **dadurch gekennzeichnet, dass** der Dekorkörper (20) formschlüssig und/oder stoffschlüssig mit dem Dichtungskörper (10) verbunden ist.

15. Dichtung nach einem der Ansprüche 9 bis 14, **dadurch gekennzeichnet, dass** die Formmasse aus einem thermoplastischen Kunststoff und/oder einem Elastomer, vorzugsweise Ethylen-Propylen-Dien-Kautschuk, besteht.
